# EUROPÄISCHE PATENTSCHRIFT

(11) **EP 2 516 227 B1**
(45) Veröffentlichungstag und Bekanntmachung des Hinweises auf die Patenterteilung: **05.03.2014**
(21) Anmeldenummer: 10800910.1
(22) Anmeldetag: 15.12.2010
(51) Int. Cl.: B60T 8/32, B60T 13/68, B60T 17/18

(54) **MEHRKANALIGES DRUCKREGELMODUL MIT NUR EINEM DRUCKSENSOR**
MULTI-CHANNEL PRESSURE CONTROL MODULE HAVING ONLY ONE PRESSURE SENSOR
MODULE DE RÉGULATION DE LA PRESSION MULTICANAL NE COMPORTANT QU'UN SEUL CAPTEUR DE PRESSION

(30) Priorität: 21.12.2009 DE 102009059811
(43) Veröffentlichungstag der Anmeldung: 31.10.2012
(73) Patentinhaber: KNORR-BREMSE Systeme für Nutzfahrzeuge GmbH, 80809 München (DE)
(72) Erfinder: WÖRNER, Ralf, 75233 Tiefenbronn (DE); RÖTHER, Friedbert, 74389 Cleebronn (DE)
(74) Vertreter: Schönmann, Kurt
(86) Internationale Anmeldenummer: PCT/EP2010/069746
(87) Internationale Veröffentlichungsnummer: WO 2011/085893

(56) Entgegenhaltungen:
- EP-A2- 0 830 997
- EP-A2- 1 028 043
- WO-A1-03/033321
- GB-A- 2 270 130

## Beschreibung

Die Erfindung geht aus von einem elektro-pneumatischen Druckregelmodul für eine druckmittelbetätigte Bremsanlage eines Fahrzeugs mit wenigstens zwei Kanälen, welches im ungestörten Betrieb elektrisch und bei einer Störung in der Elektrik pneumatisch gesteuert wird, gemäß dem Oberbegriff von Anspruch 1 sowie von einem Verfahren zum Betreiben des elektro-pneumatischen Druckregelmoduls nach dem Oberbegriff von Anspruch 6.

Ein solches Druckregelmodul ist beispielsweise aus der DE 40 30 980 A1 bekannt. Das bekannte 2-kanalige Druckregelmodul weist je einen Kanal für einen Bremsaktuator eines rechtes Rades und einen Bremsaktuator für ein linkes Rad einer Achse auf und beinhaltet je Kanal eine ein Relaisventil ansteuernde elektro-pneumatische Ventileinheit, welche jeweils ein Einlassventil und ein Auslassventil sowie ein Backup-Ventil aufweist. Ein weiteres gattungsgemäßes Druckregelmodul ist aus GB 2 270 130 A bekannt. Die WO 03/033321 A1 offenbart ein gattungsgemäßes Verfahren zum Betreiben des elektro-pneumatischen Druckregelmoduls.

Im ungestörten Betrieb, d.h. bei intakter Elektrik und Spannungsversorgung wird abhängig von einem Fahrerwunsch ein elektrisches Bremsanforderungssignal in ein Steuergerät eingesteuert, welches Steuerbefehle für das Einlass- bzw. Auslassventil aussteuert, um eine Steuerkammer des zugeordneten Relaisventils zu be- bzw. entlüften. Ein mit der Steuerkammer des Relaisventils in Verbindung stehender Drucksensor misst dabei den in einer Arbeitskammer des Relaisventils erzeugten Arbeitsdruck und meldet ein entsprechendes Signal an das Steuergerät, um für den jeweiligen Kanal eine Druckregelung zu realisieren. Im ungestörten Betrieb, d.h. bei intakter Elektrik befinden sich die Backup-Ventile in Sperrstellung, d.h. ein parallel zu dem elektrischen Bremsanforderungssignal erzeugtes pneumatisches Bremsanforderungssignal wird nicht bis zu den Steuerkammern der Relaisventile durchgesteuert. Das pneumatische und das elektrische Bremsanforderungssignal werden von einem Fußbremsmodul erzeugt.

Bei Ausfall der Spannungsversorgung oder einem Fehler in der Elektrik ist das Steuergerät stromlos und die Backup-Ventile schalten federbelastet in ihre Durchlassstellung, so dass das pneumatische Bremsanforderungssignal als Steuerdruck auf die Steuerkammern der Relaisventile schaltet, welche daraufhin einen ungeregelten Arbeitsdruck als Bremsdruck in ihren Arbeitskammern erzeugen.

Für eine getrennte Regelung des Bremsdrucks in den beiden Kanälen sind die Arbeitskammern der Relaisventile mit jeweils einem Drucksensor in Verbindung, so dass je Kanal ein eigener Drucksensor zur Verfügung steht und eine getrennte Regelung der beiden Kanäle des Druckregelmoduls realisiert wird. Dadurch wird allerdings der Aufbau eines solchen Druckregelmoduls relativ komplex.

Der vorliegenden Erfindung liegt demgegenüber die Aufgabe zugrunde, ein Druckregelmodul der oben erwähnten Art derart weiter zu entwickeln, dass es einfacher aufgebaut und kostengünstiger zu fertigen ist.

Diese Aufgabe wird erfindungsgemäß durch die Merkmale von Anspruch 1 und Anspruch 6 gelöst.

### Offenbarung der Erfindung

Gemäß der Erfindung wird ein elektro-pneumatisches Druckregelmodul für eine druckmittelbetätigte Bremsanlage eines Fahrzeugs mit wenigstens zwei Kanälen vorgeschlagen, welches im ungestörten Betrieb elektrisch und bei einer Störung in der Elektrik pneumatisch gesteuert wird, wobei
- je Kanal eine von einem elektronischen Steuergerät steuerbare elektro-pneumatische Ventileinheit mit wenigstens einem Backup-Ventil, einem Einlassventil und einem Auslassventil sowie wenigstens ein Relaisventil mit einer Steuerkammer und einer Arbeitskammer vorgesehen ist und die elektro-pneumatische Ventileinheit das Relaisventil pneumatisch steuert,
- das Backup-Ventil bei einer Störung in der Elektrik einerseits mit einer Einrichtung zur Erzeugung eines von einem Fahrerwunsch abhängigen Steuerdrucks und andererseits mit der Steuerkammer des dem betreffenden Kanal zugeordneten Relaisventils in Verbindung bringbar ist,
- die Arbeitskammer des Relaisventils eines Kanals mit wenigstens einem, wenigstens einem Rad zugeordneten pneumatischen Bremsaktuator und die Arbeitskammer des Relaisventils eines anderen Kanals mit wenigstens einem anderen, wenigstens einem anderen Rad zugeordneten pneumatischen Bremsaktuator in Verbindung steht,
- wenigstens eine sich zwischen der Steuerkammer des Relaisventils des einen Kanals und der Steuerkammer des Relaisventils des anderen Kanals erstreckende Druckmittelverbindung vorgesehen ist,
- in der Druckmittelverbindung das Backup-Ventil des einen Kanals angeordnet ist,
- wenigstens ein dem einen Rad zugeordneter Raddrehzahlsensor und wenigstens ein dem anderen Rad zugeordneter Raddrehzahlsensor vorgesehen ist, wobei jeder Raddrehzahlsensor Sensorsignale erzeugt, welche das Raddrehverhalten des ihm zugeordneten Rades repräsentieren,
- das Backup-Ventil des anderen Kanals der Druckmittelverbindung und dem Backup-Ventil des einen Kanals derart vorgeschaltet ist, dass die Druckmittelverbindung und das Backup-Ventil des einen Kanals lediglich mittels des Backup-Ventils des anderen Kanals mit dem vom Fahrerwunsch abhängigen Steuerdruck versorgbar sind,
- lediglich ein einziger Drucksensor vorgesehen ist, welcher mit der Arbeitskammer des Relaisventils des einen Kanals oder mit der Arbeitskammer des Relaisventils des anderen Kanals in Verbindung steht, und
- im ungestörten Betrieb das in der Druckmittelverbindung zwischen den Steuerkammern der Relaisventile angeordnete Backup-Ventil des einen Kanals vom Steuergerät abhängig von den Sensorsignalen der dem einen Rad und dem anderen Rad zugeordneten Raddrehzahlsensoren gesteuert wird.

Damit wird das Backup-Ventil des einen Kanals, welches beim Stand der Technik lediglich im gestörten Betrieb in Durchlassstellung geschaltet wird, auch im ungestörten Betrieb in Durchlassstellung geschaltet, um einen kanalweise getrennten Druck in der Arbeitskammern der Relaisventile der Kanäle erzielen zu können, um beispielsweise eine kanalweise separate Schlupfregelung oder Schlupfsteuerung für jeden Kanal zu realisieren, obwohl nur ein einziger Drucksensor für mehrere Kanäle vorhanden ist.

Dabei sind die beiden Backup-Ventile nicht wie bei DE 40 30 980 A1 parallel in die vom Fußbremsmodul führende Steuerdruckleitung geschaltet, sondern seriell, d.h. dass das Backup-Ventil des einen Kanals den vom Fußbremsmodul erzeugten und fahrerwunschabhängigen Steuerdruck nur dann in die Steuerkammer des dem einen Kanal zugeordneten Relaisventils einsteuern kann, wenn auch das dem anderen Kanal zugeordnete Backup-Ventil in Durchlassstellung geschaltet wird. Diese Verschaltung kann auf einfache Weise durch Vorsehen von entsprechenden Kanalbohrungen in dem die Ventile aufnehmenden Ventilblock hergestellt werden.

Folglich werden die ohnehin notwendigen Backup-Ventile im Sinne einer vorteilhaften Funktionsvereinigung einerseits im Rahmen des ungestörten Betriebs und andererseits auch im gestörten Betrieb geschaltet. Weil eine gestörte Elektrik außerordentlich selten vorkommt, wird dadurch die Funktionsfähigkeit der Backup-Ventile bereits im ungestörten Betrieb getestet.

Andererseits kommt für mehrere Kanäle nur ein einziger Drucksensor zum Einsatz, was einen Wegfall von druckleitenden Kanälen, eines Drucksensors und der Verkabelung des Drucksensors bedingt.

Der Erfindung liegt dabei der Gedanke zugrunde, dass ein unterschiedliches Raddrehzahlverhalten des dem einen Kanal zugeordneten Rades des und des dem anderen Kanal zugeordneten Rades, beispielsweise bei µ-split Bedingungen, eher selten vorkommt, wogegen eine Gleichlaufregelung der beiden Kanäle bei gleichem Drehverhalten der Räder den Regelfall darstellt.

Das Verfahren zum Betreiben des elektro-pneumatischen Druckregelmoduls sieht vor, dass ausgehend von einem im Steuergerät gespeicherten wenigstens dreidimensionalen Kennfeld, in welchem die Abhängigkeit einer Öffnungsdauer des Einlassventils und/oder einer Öffnungsdauer des Auslassventils von einem Soll-Arbeitsdruck und von einem Ist-Arbeitsdruck abgelegt ist,
- bei Einsteuerung von gleiches Raddrehverhalten des einen Rades und des anderen Rades repräsentierenden Sensorsignalen in das Steuergerät das Backup-Ventil des einen Kanals vom Steuergerät in Durchlassstellung geschaltet wird, um die Steuerkammer des Relaisventils des einen Kanals mit der Steuerkammer des Relaisventils des anderen Kanals zu verbinden, der Ist-Arbeitsdruck in der Arbeitskammer des Relaisventils des einen Kanals oder in der Arbeitskammer des Relaisventils des anderen Kanals mittels des einzigen Drucksensors gemessen und ein entsprechendes Ist-Arbeitsdrucksignal an das Steuergerät für eine synchrone Druckregelung in allen Kanälen gemeldet wird,
- bei Einsteuerung von ein unterschiedliches Raddrehverhalten des einen Rades und des anderen Rades repräsentierenden Sensorsignalen in das Steuergerät das in der Druckmittelverbindung angeordnete Backup-Ventil des eines Kanals in Sperrstellung geschaltet wird, um die Steuerkammer des Relaisventils des einen Kanals von der Steuerkammer des Relaisventils des anderen Kanals zu trennen und
- der Ist-Arbeitsdruck in der mit dem Drucksensor in Verbindung stehenden einen Arbeitskammer des Relaisventils des einen Kanals oder in der mit dem Drucksensor in Verbindung stehenden anderen Arbeitskammer des Relaisventils des anderen Kanals gemessen und ein Ist-Arbeitsdrucksignal für den einen Kanal oder für den anderen Kanal an das Steuergerät gemeldet wird, um im Rahmen einer Druckregelung des einen Kanals oder des anderen Kanals einen Arbeitsdruck für den einen Bremsaktuator oder für den anderen Bremsaktuator zu erzeugen,
- anhand des Kennfelds abhängig vom Wert des Soll-Arbeitsdrucks und abhängig vom Wert des im Laufe einer noch unter gleichem Raddrehverhalten stattgefundenen Bremsung vorliegenden Ist-Arbeitsdrucks die Öffnungsdauer des Einlassventils und/oder die Öffnungsdauer des Auslassventils der elektro-pneumatischen Ventileinheit des anderen Kanals oder die Öffnungsdauer des Einlassventils und/oder die Öffnungsdauer des Auslassventils der elektro-pneumatischen Ventileinheit des einen Kanals ermittelt und das Einlassventil oder das Auslassventil für die ermittelte Öffnungsdauer geöffnet wird, um in der Arbeitskammer des Relaisventils des anderen Kanals oder in der Arbeitskammer des Relaisventils des einen Kanals im Rahmen einer Drucksteuerung des anderen Kanals oder des einen Kanals einen Arbeitsdruck für den anderen Bremsaktuator oder für den einen Bremsaktuator zu erzeugen.

Das Kennfeld, in welchem die Abhängigkeit einer Öffnungsdauer des Einlassventils und/oder einer Öffnungsdauer des Auslassventils von einem SollArbeitsdruck und von einem Ist-Arbeitsdruck abgelegt ist, wird bevorzugt end-of-line programmiert und gibt die anhand der baulichen Randbedingungen vorhandene Gesetzmäßigkeit wider, wonach beispielsweise ein Öffnungsimpuls bestimmter Zeitdauer des Einlassventils einen bestimmten Steuerdruck in der Steuerkammer des zugeordneten Relaisventils erzeugt, woraufhin das Relaisventil einen bestimmten Ist-Arbeitsdruck aussteuert, der gemessen werden kann. Da der Öffnungsimpuls, mit dem das Einlassventil vom Steuergerät beaufschlagt wurde, einem bestimmten Bremsanforderungssignal und daher auch einem bestimmten Soll-Arbeitsdruck entspricht, ist eine Relation zwischen der Zeitdauer des Öffnungsimpulses, dem zu erwartenden Ist-Arbeitsdruck und dem Soll-Arbeitsdruck gegeben, welche in dem Kennfeld abgebildet ist. Somit kann beispielsweise ein zu erwartender Ist-Arbeitsdruck anhand des Kennfelds abhängig von der Bremsanforderung (Soll-Arbeitsdruck) und von der Zeitdauer der Schaltvorgänge der Einlass- und Auslassventile ermittelt werden, ohne dass hierfür ein Drucksensor zur Messung dieses Ist-Arbeitsdrucks notwendig wäre. Umgekehrt kann anhand des Kennfelds abhängig vom Wert des Soll-Arbeitsdrucks (Bremsanforderung) und abhängig vom Wert des im Laufe einer noch unter gleichem Raddrehverhalten stattgefundenen Bremsung vorliegenden und dann noch vom Drucksensor gemessenen Ist-Arbeitsdrucks die Öffnungsdauer des Einlassventils und/oder die Öffnungsdauer des Auslassventils des anderen Kanals ermittelt werden, welcher bei unterschiedlichem Raddrehverhalten vom Drucksensor abgeschnitten ist. Diese anhand des Kennfelds bestimmte Öffnungsdauer bestimmt dann den tatsächlichen Ist-Arbeitsdruck in der Arbeitskammer des Relaisventils des anderen Kanals, wenn ein unterschiedliches Raddrehverhalten vorliegt und keine synchrone Regelung der Kanäle mehr stattfindet.

Der Wert für den Soll-Arbeitsdruck wird dabei bevorzugt von einem ABS- (Antiblockiersystem), ESP- (Elektronisches Stabilitätsprogramm), ASR- (Antriebsschlupfregelung) oder ACC- (Adaptive Cruise Control) System und/oder fahrerwunschabhängig erzeugt, d.h. der Soll-Arbeitsdruck stammt direkt von einem Betriebsbremswertgeber wie dem pneumatischen Kanal eines Fußbremsmoduls.

Durch diese Maßnahmen findet daher bei gleichem Raddrehverhalten eine synchrone Regelung des Arbeitsdrucks statt, während bei unterschiedlichem Raddrehverhalten nur in dem den einzigen Drucksensor aufweisenden Kanal eine Regelung des Arbeitsdrucks verwirklicht und in dem Kanal ohne Drucksensor der Arbeitsdruck kennfeldbasiert gesteuert wird.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt stehen die Arbeitskammer des Relaisventils des einen Kanals mit der Arbeitskammer des Relaisventils des anderen Kanals mittels wenigstens einer Drossel in Strömungsverbindung. Dadurch findet ein Druckausgleich zwischen den beiden Arbeitskammern statt, was bei gleichem Raddrehverhalten links und rechts auch eine vorteilhaft gleiche Bremswirkung rechts und links bedingt. Zudem können Druckdifferenzen durch toleranz- oder dichtungsbedingt unterschiedliche Geometrien der Relaisventile ausgeglichen werden. Andererseits stellt sich ein Druckausgleich durch die Drossel bekanntermaßen erst allmählich ein, so dass der langsame Druckausgleich beispielsweise eine im Rahmen eines kurzzeitigen ABS-Betriebs mit unterschiedlichem Raddrehverhalten vorhandene Druckdifferenz in den Arbeitskammern der Relaisventile verschiedener Kanäle wenig beeinflusst.

Beispielsweise sind die das Raddrehverhalten der unterschiedlichen Kanäle detektierenden Raddrehzahlsensoren von einem ABS-, ASR, ESP- oder ACC-System umfasst, so dass die Signale dieser bereits vorhandenen Raddrehzahlsensoren auch für die Drucksteuerung in dem Kanal ohne eigenen Drucksensor herangezogen werden können, ohne dass hierfür zusätzliche Bauteile notwendig sind.

Genaueres geht aus der folgenden Beschreibung eines Ausführungsbeispiels hervor.

### Zeichnung

Nachstehend sind Ausführungsbeispiele der Erfindung in der Zeichnung dargestellt und in der nachfolgenden Beschreibung näher erläutert. In der Zeichnung zeigt die einzige Figur einen schematischen Aufbauplan eines elektro-pneumatischen Druckregelmoduls gemäß einer bevorzugten Ausführungsform der Erfindung.

### Beschreibung der Ausführungsbeispiele

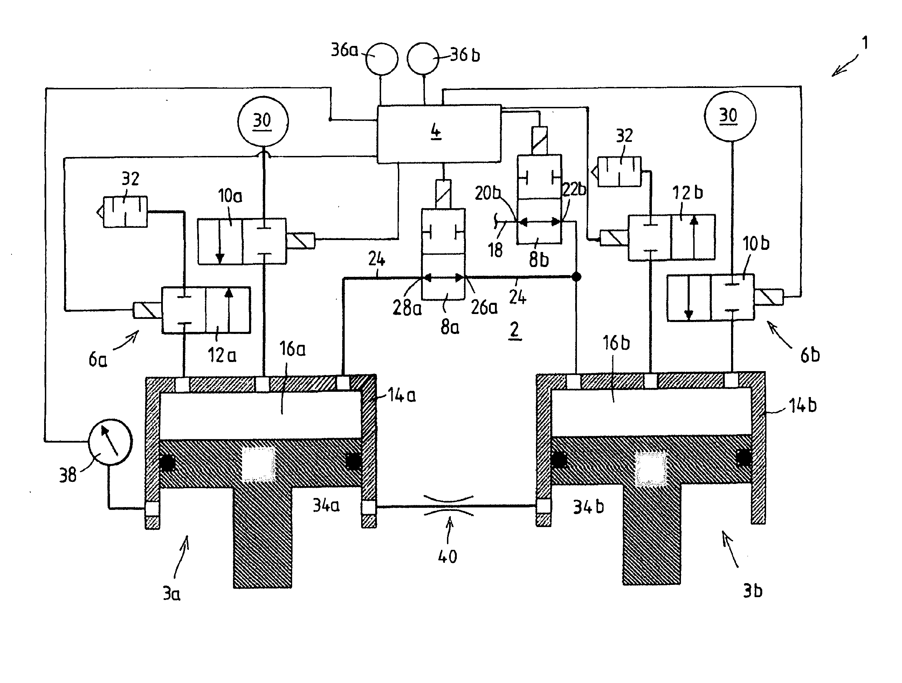

In Fig.1 ist eine bevorzugte Ausführungsform eines elektro-pneumatischen Druckregelmoduls 1 eines elektronischen Bremssystems (EBS) eines Nutzfahrzeugs dargestellt, welches beispielsweise den Arbeits- oder Bremsdruck in den Bremsaktuatoren der Hinterachse eines Nutzfahrzeugs abhängig von einem elektrischen und pneumatischen Bremsanforderungssignal erzeugt, welches beispielsweise in dem elektrischen Hinterachsekanal und in dem pneumatischen Kanal eines hier nicht gezeugten Fußbremsmoduls gebildet wird.

Das Druckregelmodul 1 umfasst beispielsweise zwei Kanäle, einen Kanal 3a für den Bremsaktuator des rechten Rades der Hinterachse und einen anderen Kanal 3b für den Bremsaktuator des linken Rades.

Das Druckregelmodul 1 wird folglich in bekannter Weise im ungestörten Betrieb elektrisch und bei einer Störung in der Elektrik, beispielsweise bei einem Spannungsausfall pneumatisch gesteuert.

Das Druckregelmodul 1 hat einen Ventilblock 2 und je Kanal eine von einem elektronischen Steuergerät 4 steuerbare elektro-pneumatische Ventileinheit 6a, 6b mit je einem Backup-Ventil 8a, 8b, je einem Einlassventil 10a, 10b und je einem Auslassventil 12a, 12b sowie wenigstens je ein Relaisventil 14a, 14b mit einer Steuerkammer 16a, 16b und einer Arbeitskammer 18a, 18b, wobei die elektro-pneumatische Ventileinheit 6a, 6b jeweils das zugeordnete Relaisventil 14a, 14b pneumatisch steuert.

Die Backup-Ventile 8a, 8b, die Einlassventile 10a, 10b und die Auslassventile 12a, 12b sind bevorzugt 2/2-Wege-Magnetventile, wobei die Einlass- und Auslassventile 10a, 10b, 12a, 12b in der stromlosen Grundstellung federbelastet in Sperrstellung und bestromt in Durchlassstellung schalten und die Backup-Ventile 8a, 8b in der stromlosen Grundstellung federbelastet in Durchlassstellung und bestromt in Sperrstellung schalten. Diese elektromagnetischen Ventile 8a, 8b, 10a, 10b, 12a, 12b, 16a, 16b werden von dem elektronischen Steuergerät 4 angesteuert.

Von dem hier aus Maßstabsgründen hier nicht gezeigten Fußbremsmodul führt eine Steuerdruckleitung 18 an einen Anschluss 20b des dem anderen Kanal 3b zugeordneten Backup-Ventils 8b heran. Bei einer Störung in der Elektrik wird dieses Backup-Ventil 8b stromlos und daher in Durchlassstellung geschaltet, wodurch der vom Fußbremsmodul herangeführte Steuerdruck an seinen anderen Anschluss 22b geschaltet wird, welcher mit einem im Ventilblock 2 ausgebildeten Druckluftkanal 24 in Verbindung steht.

An diesen Druckluftkanal 24 sind einerseits die Steuerkammern 16a, 16b der Relaisventile 14a, 14b des einen Kanals 3a und des anderen Kanals 3b angeschlossen. Andererseits ist in diesem Druckluftkanal 24 auch das Backupventil 8a des einen Kanals 3a angeordnet, welches mit seinem einen Anschluss 26a mit der Steuerkammer 16a des Relaisventils 14a des einen Kanals 3a und mit seinem anderen Anschluss 28a mit der Steuerkammer 16b des Relaisventils 14b des anderen Kanals 3b in Verbindung steht.

Somit ist das Backup-Ventil 8b des anderen Kanals 3b dem Druckluftkanal 24 und dem Backup-Ventil 8a des einen Kanals 3a derart vorgeschaltet, dass der Druckluftkanal 24 und das Backup-Ventil 8a des einen Kanals 3a lediglich mittels des Backup-Ventils 8b des anderen Kanals 3b mit dem vom Fahrerwunsch abhängigen Steuerdruck versorgbar sind. Durch die Backup-Ventile 8a, 8b sind daher zunächst die Steuerkammern 16a, 16b der Relaisventile 14a, 14b mit dem Fußbremsmodul und damit mit dem dort erzeugten Steuerdruck in Verbindung bringbar.

Die Einlassventile 10a, 10b sind einerseits jeweils an einen Druckluftvorrat 30 der Hinterachse angeschlossen, andererseits münden sie mit ihren anderen Anschlüssen in die Steuerkammern 16a, 16b der zugeordneten Relaisventile 14a, 14b. Die Auslassventile 12a, 12b stehen einerseits ebenfalls einerseits mit den Steuerkammern 16a, 16b der Relaisventile 14a, 14b in Verbindung. Weiterhin sind sie an Drucksenken 32 wie schallgedämpfte Entlüftungen angeschlossen.

In bekannter Weise können die Steuerkammern 16a, 16b der Relaisventile 14a, 14b durch Schalten der Einlass- und Auslassventile 10a, 10b, 12a, 12b be- oder entlüftet werden, um in Arbeitskammern 34a, 34b der Relaisventile 14a, 14b entsprechende Arbeitsdrücke zu erzeugen. Im Rahmen einer schlupfgeregelten Bremsung können die Einlass- und Auslassventile 10a, 10b, 12a, 12b auch getaktet angesteuert werden, insbesondere zum Druckhalten, Drucksenken und Drucksteigern des Arbeitsdrucks in den Arbeitskammern 34a, 34b, welche mit Bremskammern der hier nicht gezeigten Bremsaktuatoren des rechten und linken Rades in Verbindung stehen. Die Funktion solcher Relaisventile14a, 14b ist hinreichend bekannt. Deshalb soll hier im Einzelnen nicht mehr darauf eingegangen werden.

Weiterhin sind ein dem rechten Rad oder dem andern Kanal 3b zugeordneter Raddrehzahlsensor 36b und wenigstens ein dem linken Rad oder dem einen Kanal 3a zugeordneter Raddrehzahlsensor 36a vorgesehen, wobei jeder Raddrehzahlsensor 36a, 36b Sensorsignale in das Steuergerät 4 einsteuert, welche das Raddrehverhalten des ihm zugeordneten Rades repräsentieren. Im Steuergerät 4 ist weiterhin ein dreidimensionales Kennfeld gespeichert, in welchem die Abhängigkeit einer Öffnungsdauer der Einlassventile 10a, 10b und/oder einer Öffnungsdauer der Auslassventile 12a, 12b von einem Soll-Arbeitsdruck und von einem Ist-Arbeitsdruck abgelegt ist.

Dem Druckregelmodul 1 ist lediglich ein einziger Drucksensor 38 zugeordnet, welcher beispielsweise mit der Arbeitskammer 34a des Relaisventils 14a des einen Kanals 3a in Verbindung steht und folglich den dort herrschenden Arbeitsdruck misst.

Nicht zuletzt steht die Arbeitskammer 34a des Relaisventils 14a des einen Kanals 3a mit der Arbeitskammer 34b des Relaisventils 14b des anderen Kanals 3b mittels einer Drossel 40 in Strömungsverbindung.

Die Funktionsweise des Druckregelmodus 1 ist dann wie folgt:
Im ungestörten Betrieb, d.h. bei intakter Spannungsversorgung und intaktem Steuergerät 4 wird das in dem Druckluftkanal 24 zwischen den Steuerkammern 16a, 16b der Relaisventile 14a, 14b angeordnete Backup-Ventil 8a des einen Kanals 3a vom Steuergerät 4 abhängig von den Sensorsignalen der dem rechten Rad und dem linken Rad zugeordneten Raddrehzahlsensoren 36a, 36b wie im Folgenden beschrieben gesteuert. Das Backup-Ventil 8b des anderen Kanals 3b bleibt im ungestörten Betrieb geschlossen, um eine Einsteuerung des vom Fußbremsmodul gebildeten Steuerdrucks in die Steuerkammern 16a, 16b der Relaisventile 14a, 14b zu verhindern.

Bei Einsteuerung von gleiches Raddrehverhalten des rechten Rades und des linken Rades repräsentierenden Sensorsignalen durch die Raddrehzahlsensoren 36a, 36b in das Steuergerät 4 wird das Backup-Ventil 8a des einen Kanals 3a vom Steuergerät 4 in Durchlassstellung geschaltet, um die Steuerkammer 16a des Relaisventils 14a des einen Kanals 3a mit der Steuerkammer 16b des Relaisventils 14b des anderen Kanals 3b zu verbinden. Darüber hinaus wird der Steuerdruck in den Steuerkammern 16a, 16b der Relaisventile 14a, 14b durch Schalten der Einlass- und Auslassventile 10a, 10b, 12a, 12b gebildet, wobei diese Ventile vom Steuergerät 4 entsprechend der Vorgabe durch das Bremsanforderungssignal gesteuert werden. Als Folge des in den Steuerkammern 16a, 16b anstehenden Steuerdrucks wird ein Ist-Arbeitsdruck in den Arbeitskammern 34a, 34b der Relaisventile 14a, 14b gebildet, wobei der Ist-Arbeitsdruck in der Arbeitskammer 34a des Relaisventils 14a des einen Kanals 3a mittels des einzigen Drucksensors 38 gemessen und ein entsprechendes Ist-Arbeitsdrucksignal an das Steuergerät 4 für eine synchrone Druckregelung in beiden Kanälen 3a, 3b gemeldet wird. Mit anderen Worten wird die Differenz zwischen dem gemessenen Ist-Arbeitsdruck und dem Soll-Arbeitsdruck, welcher beispielsweise von einer Schlupfregeleinrichtung wie ABS-, ASR- oder ESP und vom Bremsanforderungssignal des Fahrers vorgegeben wird, für beide Kanäle 3a, 3b synchron ausgeregelt.

Bei Einsteuerung von ein unterschiedliches Raddrehverhalten des rechten Rades und des linken Rades repräsentierenden Sensorsignalen in das Steuergerät 4 wird das in dem Druckluftkanal 24 angeordnete Backup-Ventil 8a des eines Kanals 3a in Sperrstellung geschaltet, um die Steuerkammer 16a des Relaisventils 14a des einen Kanals 3a von der Steuerkammer 16b des Relaisventils 14b des anderen Kanals 3b zu trennen. Das Backup-Ventil 8b des anderen Kanals 3b bleibt weiterhin geschlossen. Außerdem wird der Ist-Arbeitsdruck in der mit dem Drucksensor 38 in Verbindung stehenden Arbeitskammer 34a des Relaisventils 14a des einen Kanals 3a gemessen und ein Ist-Arbeitsdrucksignal für den einen Kanal 3a an das Steuergerät 4 gemeldet, um im Rahmen einer Druckregelung des einen Kanals 3a einen Arbeitsdruck für den einen Bremsaktuator zu erzeugen.

Dann wird anhand des im Steuergerät 4 gespeicherten Kennfelds abhängig vom vorgegebenen Wert des Soll-Arbeitsdrucks, welcher beispielsweise von einer Schlupfregeleinrichtung wie ABS-, ASR- oder ESP und vom Bremsanforderungssignal des Fahrers vorgegeben wird und abhängig vom Wert des im Laufe einer noch unter gleichem Raddrehverhalten stattgefundenen Bremsung vorliegenden Ist-Arbeitsdrucks, welcher noch im Rahmen einer vorangehenden synchronen Druckregelung beider Kanäle 3a, 3b bei noch geöffnetem Backup-Ventil 8a des einen Kanals 3a durch den einzigen Drucksensor 38 gemessen werden konnte, die Öffnungsdauer des Einlassventils 10b und/oder die Öffnungsdauer des Auslassventils 12b des anderen Kanals 3b ermittelt. Das Einlassventil 10b oder das Auslassventil 12b des anderen Kanals 3b wird sodann für die ermittelte Öffnungsdauer geöffnet, um in der Arbeitskammer 34b des Relaisventils 14b des anderen Kanals 3b im Rahmen einer Drucksteuerung einen Arbeitsdruck für den anderen Bremsaktuator zu erzeugen. Das zunächst end-of-line programmierte Kennfeld wird bevorzugt im Bremsbetrieb im Sinne eines "lernfähigen" Kennfelds bei synchronem und geregeltem Gleichlauf der beiden Kanäle 3a, 3b (gleiches Raddrehverhalten) laufend korrigiert, um es an veränderte Randbedingungen anzupassen.

Bei gestörtem Betrieb, d.h. bei fehlerhafter Spannungsversorgung oder defektem Steuergerät 4 sind sämtliche 2/2-Wege-Magnetventile 8a, 8b, 10a, 10b, 12a, 12b stromlos geschaltet, so dass die Einlassventile 10a, 10b und die Auslassventile 12a, 12b federbelastet in die in der Figur gezeigte Sperrstellung und die beiden Backup-Ventile 8a, 8b in die in der Figur gezeigte Durchlassstellung schalten. Dann kann der vom Fußbremsmodul herangeführte pneumatische Steuerdruck zunächst das offene Backup-Ventil 8b des anderen Kanals 3b passieren und so in die Steuerkammer 16b des Relaisventils 14b des anderen Kanals 3b sowie in den Druckluftkanal 24 einströmen. Vom Druckluftkanal 24 gelangt der Steuerdruck über das offene Backup-Ventil 8a des einen Kanals 3a auch in die Steuerkammer 16a des Relaisventils 14a des einen Kanals 3a. In der Folge wird synchron ein im wesentlichen identischer Arbeitsdruck in den Arbeitskammern 34a, 34b der beiden Relaisventile 14a, 14b erzeugt, welcher an die entsprechenden Bremsaktuatoren weitergeleitet wird. Da das Steuergerät 4 in diesem Fall nicht funktionsfähig ist, kommt es auf den Drucksensor 38 nicht an, so dass der Arbeitsdruck nur abhängig von der Bremsanforderung und ungeregelt gebildet wird.

Gemäß einer weiteren, hier nicht gezeigten Ausführungsform steht der einzige Drucksensor 38 nicht mit der Arbeitskammer 34a des Relaisventils 14a des einen Kanals 3a, sondern mit der Arbeitskammer 34b des Relaisventils 14b des anderen Kanals 3b in Verbindung und misst den dort herrschenden Ist-Arbeitsdruck.

Dann wird bei Einsteuerung von gleiches Raddrehverhalten des einen Rades und des anderen Rades repräsentierenden Sensorsignalen in das Steuergerät 4 das Backup-Ventil 8a des einen Kanals 3a vom Steuergerät 4 wiederum in Durchlassstellung geschaltet, um die Steuerkammer 16a des Relaisventils 14a des einen Kanals 3a mit der Steuerkammer 16b des Relaisventils 14b des anderen Kanals 3b zu verbinden. Weiterhin wird der Ist-Arbeitsdruck in der Arbeitskammer 34b des Relaisventils 14b des anderen Kanals 3b mittels des einzigen Drucksensors 38 gemessen und ein entsprechendes Ist-Arbeitsdrucksignal an das Steuergerät 4 für eine synchrone Druckregelung in beiden Kanälen 3a, 3b gemeldet.

Bei Einsteuerung von ein unterschiedliches Raddrehverhalten des einen Rades und des anderen Rades repräsentierenden Sensorsignalen in das Steuergerät 4 wird das in der Druckmittelverbindung 24 angeordnete Backup-Ventil 8a des einen Kanals 3a in Sperrstellung geschaltet wird, um die Steuerkammer 16a des Relaisventils 14a des einen Kanals 3a von der Steuerkammer 16b des Relaisventils 14b des anderen Kanals 3b zu trennen, wie beim vorangehenden Ausführungsbeispiel beschrieben.

Jedoch wird der Ist-Arbeitsdruck in der mit dem Drucksensor 38 in Verbindung stehenden anderen Arbeitskammer 34b des Relaisventils 14b des anderen Kanals 3b gemessen und ein Ist-Arbeitsdrucksignal für den anderen Kanal 3b an das Steuergerät 4 gemeldet, um im Rahmen einer Druckregelung des anderen Kanals 3b einen Arbeitsdruck für den anderen Bremsaktuator zu erzeugen.

Schließlich wird anhand des Kennfelds abhängig vom Wert des Soll-Arbeitsdrucks und abhängig vom Wert des im Laufe einer noch unter gleichem Raddrehverhalten stattgefundenen Bremsung vorliegenden Ist-Arbeitsdrucks die Öffnungsdauer des Einlassventils 10a und/oder die Öffnungsdauer des Auslassventils 12a der elektro-pneumatischen Ventileinheit 6a des einen Kanals 3a ermittelt und das Einlassventil 10a oder das Auslassventil 12a für die ermittelte Öffnungsdauer geöffnet wird, um in der Arbeitskammer 34a des Relaisventils 14a des einen Kanals 3a im Rahmen einer Drucksteuerung des einen Kanals 3a einen Arbeitsdruck für den einen Bremsaktuator zu erzeugen.

Gemäß einer weiteren Ausführungsform erfolgt die Drehzahlauswertung der Raddrehzahlsensoren 36a, 36b nicht durch das dem Druckregelmodul 1 zugeordnete Steuergerät 4, sondern beispielsweise durch ein zentrales Steuergerät, beispielsweise ein ABS-Steuergerät, welches mit dem Steuergerät 4 des Druckregelmoduls 1 kommuniziert, um ihm die Raddrehzahlinformation zu übermitteln.

Den Ausführungsformen gemein ist, dass bei einer schnellen Bremsbetätigung, d.h. bei einer eine gewisse Grenzbetätigungsgeschwindigkeit oder - beschleunigung überschreitenden Bremsbetätigung die Einlassventile 10a, 10b und die Auslassventile 12a, 12b abhängig vom Signal des Drucksensors 38 vom Steuergerät 4 synchron angesteuert werden.

Demgegenüber werden bei einer langsamen Bremsbetätigung, d.h. bei einer die Grenzbetätigungsgeschwindigkeit oder -beschleunigung erreichenden oder unterschreitenden Bremsbetätigung die Einlassventile 10a, 10b und die Auslassventile 12a, 12b einzeln oder separat angesteuert.

In beiden Fällen werden eventuelle Druckunterschiede in den Steuerkammern 16a, 16b dann durch die dann offene Verbindung durch den Druckluftkanal 24 ausgeglichen.

### Bezugszeichenliste

- 1: Druckregelmodul
- 2: Ventilblock
- 3 a/b: Kanal
- 4: Steuergerät
- 6 a/b: Ventileinheit
- 8 a/b: Backup-Ventil
- 10 a/b: Einlassventil
- 12 a/b: Auslassventil
- 14 a/b: Relaisventil
- 16 a/b: Steuerkammer
- 18: Steuerdruckleitung
- 20 b: Anschluss
- 22 b: Anschluss
- 24: Druckluftkanal
- 26 a: Anschluss
- 28 a: Anschluss
- 30: Druckluftvorrat
- 32: Drucksenke
- 34 a/b: Arbeitskammer
- 36 a/b: Raddrehzahlsensor
- 38: Drucksensor
- 40: Drossel

## Patentansprüche

1. Elektro-pneumatisches Druckregelmodul (1) für eine druckmittelbetätigte Bremsanlage eines Fahrzeugs mit wenigstens zwei Kanälen (3a, 3b), welches im ungestörten Betrieb elektrisch und bei einer Störung in der Elektrik pneumatisch gesteuert wird, wobei
a) je Kanal (3a, 3b) eine von einem elektronischen Steuergerät (4) steuerbare elektro-pneumatische Ventileinheit (6a, 6b) mit wenigstens einem Backup-Ventil (8a, 8b), einem Einlassventil (10a, 10b) und einem Auslassventil (12a, 12b) sowie wenigstens ein Relaisventil (14a, 14b) mit einer Steuerkammer (16a, 16b) und einer Arbeitskammer (34a, 34b) vorgesehen ist und die elektro-pneumatische Ventileinheit (6a, 6b) das Relaisventil (14a, 14b) pneumatisch steuert,
b) das Backup-Ventil (8a, 8b) bei einer Störung in der Elektrik einerseits mit einer Einrichtung zur Erzeugung eines von einem Fahrerwunsch abhängigen Steuerdrucks und andererseits mit der Steuerkammer (16a, 16b) des dem betreffenden Kanal (3a, 3b) zugeordneten Relaisventils (14a, 14b) in Verbindung bringbar ist,
c) die Arbeitskammer (34a) des Relaisventils (14a) des einen Kanals (3a) mit wenigstens einem, wenigstens einem Rad zugeordneten einen pneumatischen Bremsaktuator und die Arbeitskammer (34b) des Relaisventils (14b) des anderen Kanals (3b) mit wenigstens einem anderen, wenigstens einem anderen Rad zugeordneten pneumatischen Bremsaktuator in Verbindung steht,
d) wenigstens eine sich zwischen der Steuerkammer (16a) des Relaisventils (14a) des einen Kanals (3a) und der Steuerkammer (16b) des Relaisventils (14b) des anderen Kanals (3b) erstreckende Druckmittelverbindung (24) vorgesehen ist,
e) in der Druckmittelverbindung (24) das Backup-Ventil (8a) des einen Kanals (3a) angeordnet ist,
f) wenigstens ein dem einen Rad zugeordneter Raddrehzahlsensor (36a) und wenigstens ein dem anderen Rad zugeordneter Raddrehzahlsensor (36b) vorgesehen ist, wobei jeder Raddrehzahlsensor (36a, 36b) Sensorsignale erzeugt, welche das Raddrehverhalten des ihm zugeordneten Rades repräsentieren, **dadurch gekennzeichnet, dass**
g) das Backup-Ventil (8b) des anderen Kanals (3b) der Druckmittelverbindung (24) und dem Backup-Ventil (8a) des einen Kanals (3a) derart vorgeschaltet ist, dass die Druckmittelverbindung (24) und das Backup-Ventil (8a) des einen Kanals (3a) lediglich mittels des Backup-Ventils (8b) des anderen Kanals (3b) mit dem vom Fahrerwunsch abhängigen Steuerdruck versorgbar sind,
h) lediglich ein einziger Drucksensor (38) vorgesehen ist, welcher mit der Arbeitskammer (34a) des Relaisventils (14a) des einen Kanals (3a) oder mit der Arbeitskammer (34b) des Relaisventils (14b) des anderen Kanals (3b) in Verbindung steht, und
i) im ungestörten Betrieb das in der Druckmittelverbindung (24) zwischen den Steuerkammern (16a, 16b) der Relaisventile (14a, 14b) angeordnete Backup-Ventil (8a) des einen Kanals (3a) vom Steuergerät (4) abhängig von den Sensorsignalen der dem einen Rad und dem anderen Rad zugeordneten Raddrehzahlsensoren (36a, 36b) gesteuert wird.

2. Druckregelmodul nach Anspruch 1, **dadurch gekennzeichnet, dass**
a) der eine Anschluss (20b) des Backup-Ventils (8b) des anderen Kanals (3b) mit der Einrichtung zur Erzeugung des von einem Fahrerwunsch abhängigen Steuerdrucks und der andere Anschluss (22b) des Backup-Ventils (8b) des anderen Kanals (3b) mit der Steuerkammer (16b) des Relaisventils (14b) des anderen Kanals (3b) verbunden ist,
b) der eine Anschluss (28a) des Backup-Ventils (8a) des einen Kanals (3a) mit der Steuerkammer (16a) des Relaisventils (14a) des einen Kanals (3a) und der andere Anschluss (26a) des Backup-Ventils (8a) des einen Kanals (3a) mit dem anderen Anschluss (22b) des Backup-Ventils (8b) des anderen Kanals (3b) sowie mit der Steuerkammer (16b) des Relaisventils (14b) des anderen Kanals (3b) verbunden ist.

3. Druckregelmodul nach einem der vorhergehenden Ansprüche, **dadurch gekennzeichnet, dass** die Arbeitskammer (34a) des Relaisventils (14a) des einen Kanals (3a) mit der Arbeitskammer (34b) des Relaisventils (14b) des anderen Kanals (3b) mittels wenigstens einer Drossel (40) in Strömungsverbindung steht.

4. Druckregelmodul nach einem der vorhergehenden Ansprüche, **dadurch gekennzeichnet, dass** die Einlassventile (10a, 10b), die Auslassventile (12a, 12b) und die Backup-Ventile (8a, 8b) jeweils als 2/2-Wege-Magnetventil mit einer Sperrstellung und einer Durchlassstellung ausgebildet sind.

5. Druckregelmodul nach einem der vorhergehenden Ansprüche, **dadurch gekennzeichnet, dass** die Raddrehzahlsensoren (36a, 36b) von einem ABS-, ASR, ESP- oder ACC-System umfasst sind.

6. Verfahren zum Betreiben des elektro-pneumatischen Druckregelmoduls (1) nach einem der vorhergehenden Ansprüche, **dadurch gekennzeichnet, dass** ausgehend von einem im Steuergerät (4) gespeicherten wenigstens dreidimensionalen Kennfeld, in welchem die Abhängigkeit einer Öffnungsdauer des Einlassventils (10a, 10b) und/oder einer Öffnungsdauer des Auslassventils (12a, 12b) von einem Soll-Arbeitsdruck und von einem Ist-Arbeitsdruck abgelegt ist,
a) bei Einsteuerung von gleiches Raddrehverhalten des einen Rades und des anderen Rades repräsentierenden Sensorsignalen in das Steuergerät (4) das Backup-Ventil (8a) des einen Kanals (3a) vom Steuergerät (4) in Durchlassstellung geschaltet wird, um die Steuerkammer (16a) des Relaisventils (14a) des einen Kanals (3a) mit der Steuerkammer (16b) des Relaisventils (14b) des anderen Kanals (3b) zu verbinden, der Ist-Arbeitsdruck in der Arbeitskammer (34a) des Relaisventils (14a) des einen Kanals (3a) oder in der Arbeitskammer (34b) des Relaisventils (14b) des anderen Kanals (3b) mittels des einzigen Drucksensors (38) gemessen und ein entsprechendes Ist-Arbeitsdrucksignal an das Steuergerät (4) für eine synchrone Druckregelung in allen Kanälen (3a, 3b) gemeldet wird,
b) bei Einsteuerung von ein unterschiedliches Raddrehverhalten des einen Rades und des anderen Rades repräsentierenden Sensorsignalen in das Steuergerät (4) das in der Druckmittelverbindung (24) angeordnete Backup-Ventil (8a) des eines Kanals (3a) in Sperrstellung geschaltet wird, um die Steuerkammer (16a) des Relaisventils (14a) des einen Kanals (3a) von der Steuerkammer (16b) des Relaisventils (14b) des anderen Kanals (3b) zu trennen und
b1) der Ist-Arbeitsdruck in der mit dem Drucksensor (38) in Verbindung stehenden einen Arbeitskammer (34a) des Relaisventils (14a) des einen Kanals (3a) oder in der mit dem Drucksensor (38) in Verbindung stehenden anderen Arbeitskammer (34b) des Relaisventils (14b) des anderen Kanals (3b) gemessen und ein Ist-Arbeitsdrucksignal für den einen Kanal (3a) oder für den anderen Kanal (3b) an das Steuergerät (4) gemeldet wird, um im Rahmen einer Druckregelung des einen Kanals (3a) oder des anderen Kanals (3b) einen Arbeitsdruck für den einen Bremsaktuator oder für den anderen Bremsaktuator zu erzeugen,
b2) anhand des Kennfelds abhängig vom Wert des Soll-Arbeitsdrucks und abhängig vom Wert des im Laufe einer noch unter gleichem Raddrehverhalten stattgefundenen Bremsung vorliegenden Ist-Arbeitsdrucks die Öffnungsdauer des Einlassventils (10b) und/oder die Öffnungsdauer des Auslassventils (12b) der elektro-pneumatischen Ventileinheit (6b) des anderen Kanals (3b) oder die Öffnungsdauer des Einlassventils (10a) und/oder die Öffnungsdauer des Auslassventils (12a) der elektro-pneumatischen Ventileinheit (6a) des einen Kanals (3a) ermittelt und das Einlassventil (10a, 10b) oder das Auslassventil (12a, 12b) für die ermittelte Öffnungsdauer geöffnet wird, um in der Arbeitskammer (34b) des Relaisventils (14b) des anderen Kanals (3b) oder in der Arbeitskammer (34a) des Relaisventils (14a) des einen Kanals (3a) im Rahmen einer Drucksteuerung des anderen Kanals (3b) oder des einen Kanals (3a) einen Arbeitsdruck für den anderen Bremsaktuator oder für den einen Bremsaktuator zu erzeugen.

7. Verfahren zum Betreiben eines Druckregelmoduls nach Anspruch 6, **dadurch gekennzeichnet, dass** das Kennfeld im Bremsbetrieb angepasst wird.

8. Verfahren zum Betreiben eines Druckregelmoduls nach Anspruch 6 oder 7, **dadurch gekennzeichnet, dass** der Wert für den Soll-Arbeitsdruck von einem ABS-, ESP-, ASR- oder ACC-System und/ oder fahrerwunschabhängig erzeugt wird.

## Claims

1. An electro-pneumatic pressure control module (1) for a pressure-medium-actuated brake system of a motor vehicle, having at least two channels (3a, 3b), said module being controlled electrically in uninterrupted operation and pneumatically in the event of a fault in the electrics, wherein
a) one electro-pneumatic valve unit (6a, 6b), which is controllable by an electronic control device (4) and has at least one backup valve (8a, 8b), one inlet valve (10a, 10b) and one outlet valve (12a, 12b), and also at least one relay valve (14a, 14b) having a control chamber (16a, 16b) and a working chamber (34a, 34b) are provided per channel (3a, 3b), and the electro-pneumatic valve unit (6a, 6b) pneumatically controls the relay valve (14a, 14b),
b) the backup valve (8a, 8b), in the event of a fault in the electrics, can be connected to a device for generating a control pressure that is dependent on a driver's request and also to the control chamber (16a, 16b) of the relay valve (14a, 14b) assigned to the channel (3a, 3b) in question,
c) the working chamber (34a) of the relay valve (14a) of one channel (3a) is connected to at least one pneumatic brake actuator that is assigned to at least one wheel and the working chamber (34b) of the relay valve (14b) of the other channel (3b) is connected to at least one other pneumatic brake actuator that is assigned to at least one other wheel,
d) at least one pressure-medium connection (24) that extends between the control chamber (16a) of the relay valve (14a) of the one channel (3a) and the control chamber (16b) of the relay valve (14b) of the other channel (3b) is provided,
e) the backup valve (8a) of the one channel (3a) is arranged in the pressure-medium connection (24),
f) at least one wheel speed sensor (36a) assigned to the one wheel and at least one wheel speed sensor (36b) assigned to the other wheel are provided, wherein each wheel speed sensor (36a, 36b) generates sensor signals which represent the wheel rotational behaviour of the wheel assigned thereto, **characterised in that**
g) the backup valve (8b) of the other channel (3b) is connected upstream of the pressure-medium connection (24) and of the backup valve (8a) of the one channel (3a) in such a way that the pressure-medium connection (24) and the backup valve (8a) of the one channel (3a) can be supplied with the control pressure that is dependent on the driver's request only by means of the backup valve (8b) of the other channel (3b),
h) there is provided only a single pressure sensor (38), which is connected to the working chamber (34a) of the relay valve (14a) of the one channel (3a) or to the working chamber (34b) of the relay valve (14b) of the other channel (3b), and
i) in uninterrupted operation, the backup valve (8a) of the one channel (3a), said backup valve (8a) being arranged in the pressure-medium connection (24) between the control chambers (16a, 16b) of the relay valves (14a, 14b), is controlled by the control device (4) in a manner dependent on the sensor signals from the wheel speed sensors (36a, 36b) assigned to the one wheel and to the other wheel.

2. The pressure control module as claimed in claim 1, **characterised in that**
a) the one connection (20b) of the backup valve (8b) of the other channel (3b) is connected to the device for generating the control pressure that is dependent on a driver's request, and the other connection (22b) of the backup valve (8b) of the other channel (3b) is connected to the control chamber (16b) of the relay valve (14b) of the other channel (3b),
b) the one connection (28a) of the backup valve (8a) of the one channel (3a) is connected to the control chamber (16a) of the relay valve (14a) of the one channel (3a) and the other connection (26a) of the backup valve (8a) of the one channel (3a) is connected to the other connection (22b) of the backup valve (8b) of the other channel (3b) and also to the control chamber (16b) of the relay valve (14b) of the other channel (3b).

3. The pressure control module as claimed in either of the preceding claims, **characterised in that** the working chamber (34a) of the relay valve (14a) of the one channel (3a) is connected in terms of flow to the working chamber (34b) of the relay valve (14b) of the other channel (3b) by means of at least one throttle (40).

4. The pressure control module as claimed in one of the preceding claims, **characterised in that** the inlet valves (10a, 10b), the outlet valves (12a, 12b) and the backup valves (8a, 8b) are each in the form of a 2/2-way solenoid valve having a blocking position and a passage position.

5. The pressure control module as claimed in one of the preceding claims, **characterised in that** the wheel speed sensors (36a, 36b) are included in an ABS, ASR, ESP or ACC system.

6. A method for operating the electro-pneumatic pressure control module (1) as claimed in one of the preceding claims, **characterised in that**, starting from an at least three-dimensional characteristic diagram which is stored in the control device (4) and in which the dependence of an opening duration of the inlet valve (10a, 10b) and/or of an opening duration of the outlet valve (12a, 12b) on a reference working pressure and on an actual working pressure is stored,
a) when sensor signals that represent an identical wheel rotational behaviour of the one wheel and of the other wheel are input into the control device (4), the backup valve (8a) of the one channel (3a) is switched into the passage position by the control device (4) in order to connect the control chamber (16a) of the relay valve (14a) of the one channel (3a) to the control chamber (16b) of the relay valve (14b) of the other channel (3b), the actual working pressure in the working chamber (34a) of the relay valve (14a) of the one channel (3a) or in the working chamber (34b) of the relay valve (14b) of the other channel (3b) is measured by means of the single pressure sensor (38), and a corresponding actual working pressure signal is sent to the control device (4) for synchronous pressure control in all channels (3a, 3b),
b) when sensor signals that represent a different wheel rotational behaviour of the one wheel and of the other wheel are input into the control device (4), the backup valve (8a), arranged in the pressure-medium connection (24), of the one channel (3a) is switched into the blocking position, in order to separate the control chamber (16a) of the relay valve (14a) of the one channel (3a) from the control chamber (16b) of the relay valve (14b) of the other channel (3b), and
b1) the actual working pressure in the one working chamber (34a), which is connected to the pressure sensor (38), of the relay valve (14a) of the one channel (3a) or in the other working chamber (34b), which is connected to the pressure sensor (38), of the relay valve (14b) of the other channel (3b) is measured and an actual working pressure signal for the one channel (3a) or for the other channel (3b) is sent to the control device (4), in order to generate a working pressure for the one brake actuator or for the other brake actuator in the context of pressure control of the one channel (3a) or of the other channel (3b),
b2) the characteristic diagram is used to determine the opening duration of the inlet valve (10b) and/or the opening duration of the outlet valve (12b) of the electro-pneumatic valve unit (6b) of the other channel or the opening duration of the inlet valve (10a) and/or the opening duration of the outlet valve (12a) of the electro-pneumatic valve unit (6a) of the one channel (3a) in a manner dependent on the value of the reference working pressure and dependent on the value of the actual working pressure present during a braking operation that has taken place still with an identical wheel rotational behaviour, and the inlet valve (10a, 10b) or the outlet valve (12a, 12b) is opened for the determined opening duration, in order to generate a working pressure for the other brake actuator or for the one brake actuator in the working chamber (34b) of the relay valve (14b) of the other channel (3b) or in the working chamber (34a) of the relay valve (14a) of the one channel (3a) in the context of a pressure control of the other channel (3b) or of the one channel (3a).

7. The method for operating a pressure control module as claimed in claim 6, **characterised in that** the characteristic diagram is adapted in braking operation.

8. The method for operating a pressure control module as claimed in claim 6 or 7, **characterised in that** the value for the reference working pressure is generated by an ABS, ESP, ASR or ACC system and/or in a manner dependent on a driver's request.

## Revendications

1. Module (1) électropneumatique de régulation de la pression pour une installation de freinage actionné en moyenne pression d'un véhicule, comprenant au moins deux canaux (3a, 3b), qui, en fonctionnement sans panne, est commandé électriquement et, s'il y a une panne d'électricité, pneumatiquement, dans lequel
a) pour chaque canal (3a, 3b), il est prévu un groupe (6a, 6b) électropneumatique de vanne, qui peut être commandé par un appareil (4) électronique de commande et qui a au moins une vanne (8a, 8b) de backup, une vanne (10a, 10b) d'entrée et une vanne (12a, 12b) de sortie, ainsi qu'au moins une vanne (14a, 14b) relais ayant une chambre (16a, 16b) de commande et une chambre (34a, 3ab) de travail, et le groupe (6a, 6b) électropneumatique de vanne commande pneumatiquement la vanne (14a, 14b) relais,
b) la vanne (8a, 8b) de backup peut, s'il se produit une panne d'électricité, être mise en communication, d'une part, avec un dispositif de production d'une pression de commande qui dépend de ce que souhaite le conducteur et, d'autre part, avec la chambre (16a, 16b) de commande de la vanne (14a, 14b) relais associée au canal (3a, 3b) concerné,
c) la chambre (34a) de travail de la vanne (14a) relais de l'un des canaux (3a) est en liaison avec au moins un actionneur pneumatique de frein associé à au moins une roue et la chambre (34b) de travail de la vanne (14b) relais de l'autre canal (3b) est en liaison avec au moins un autre actionneur pneumatique de frein associé à au moins une autre roue,
d) il est prévu une liaison (24) en moyenne pression s'étendant entre la chambre (16a) de commande de la vanne (14a) relais de l'un des canaux (3a) et la chambre (16b) de commande de la vanne (14b) de l'autre canal (3b),
e) la vanne (8a) de backup de l'un des canaux (3a) est montée dans la liaison (24) en moyenne pression,
f) il est prévu au moins un capteur (36a) de la vitesse de roue associé à une roue et au moins un capteur (36b) de la vitesse de roue associé à l'autre roue, chaque capteur (36a, 36b) de vitesse de roue produisant des signaux de capteurs, qui représentent le comportement en vitesse de la roue qui lui est associée, **caractérisé en ce que**
g) la vanne (8b) de backup de l'autre canal (3b) de la liaison (24) en moyenne pression est montée en amont de la vanne (8a) de backup de l'un des canaux (3a), de manière à ce que la liaison (24) en moyenne pression et la vanne (8a) de backup de l'un des canaux (3a) puissent être alimentées seulement au moyen de la vanne (8b) de backup de l'autre canal (3b) en la pression de commande qui dépend de ce que souhaite le conducteur,
h) il est prévu seulement un capteur (38) unique de pression, qui est en liaison avec la chambre (34a) de travail de la vanne (14a) relais de l'un des canaux (3a) ou avec la chambre (34b) de travail de la vanne (14b) relais de l'autre canal (3b), et
i) en fonctionnement sans panne, la vanne (8a) de backup de l'un des canaux (3a), montée dans la liaison (24) en moyenne pression entre les chambres (16a, 16b) de commande des vannes (14a, 14b) relais, est commandée par l'appareil (4) de commande en fonction des signaux de capteurs (36a, 36b) de vitesse de roue associés à l'une des roues et à l'autre roue.

2. Module de régulation de la pression suivant la revendication 1, **caractérisé en ce que**
a) l'un des raccords (20b) de la vanne (8b) de backup de l'autre canal (3b) communique avec le dispositif de production de la pression de commande qui dépend de ce que souhaite le conducteur et l'autre raccord (22b) de la vanne (8b) de backup de l'autre canal (3b) communique avec la chambre (16b) de commande de la vanne (14b) relais de l'autre canal (3b),
b) l'un des raccords (28a) de la vanne (8a) de backup de l'un des canaux (3a) communique avec la chambre (16a) de commande de la vanne (14a) relais de l'un des canaux (3a) et l'autre raccord (26a) de la vanne (8a) de backup de l'un des canaux (3a) communique avec l'autre raccord (22b) de la vanne (8b) de backup de l'autre canal (3b), ainsi qu'avec la chambre (16b) de commande de la vanne (14b) relais de l'autre canal (3b).

3. Module de régulation de la pression suivant l'une des revendications précédentes, **caractérisé en ce que** la chambre (34a) de travail de la vanne (14a) relais de l'un des canaux (3a) est en liaison fluidique avec la chambre (34b) de travail de la vanne (14b) relais de l'autre canal (3b) au moyen d'au moins un étranglement (40).

4. Module de régulation de la pression suivant l'une des revendications précédentes, **caractérisé en ce que** les vannes (10a, 10b) d'entrée, les vannes (12a, 12b) de sortie et les vannes (8a, 8b) de backup sont constituées respectivement sous la forme d'électrovannes à 2/2 voies ayant une position d'arrêt et une position de passage.

5. Module de régulation de la pression suivant l'une des revendications précédentes, **caractérisé en ce que** les capteurs (36a, 36b) de vitesse de roue sont compris dans un système ABS, ASR, ESP ou ACC.

6. Procédé pour faire fonctionner le module (1) électropneumatique de régulation de la pression suivant l'une des revendications précédentes, **caractérisé en ce que**, à partir d'au moins un champ de caractéristiques en trois dimensions qui est mémorisé dans l'appareil (4) de commande et dans lequel est mémorisée la variation d'une durée d'ouverture de la vanne (10a, 10b) d'entrée et/ou d'une durée d'ouverture de la vanne (12a, 12b) de sortie en fonction d'une pression de travail de consigne et d'une pression de travail réelle,
a) lors de l'entrée de signaux de capteurs représentant un même comportement de vitesse de l'une des roues et de l'autre roue dans l'appareil (4) de commande, la vanne (8a) de backup de l'un des canaux (3a) est mise en la position de passage par l'appareil (4) de commande pour mettre la chambre (16a) de commande de la vanne (14a) relais de l'un des canaux (3a) en communication avec la chambre (16b) de commande de la vanne (14b) relais de l'autre canal (3b), la pression de travail réelle dans la chambre (34a) de travail de la vanne (14a) relais de l'un des canaux (3a) ou dans la chambre (34b) de travail de la vanne (14b) relais de l'autre canal (3b) est mesurée au moyen du capteur (38) unique de pression et un signal de pression de travail réelle correspondante est envoyé à l'appareil (4) de commande pour une régulation en synchronisme de la pression dans tous les canaux (3a, 3b),
b) lors de l'entrée de signaux de capteurs représentant un comportement de vitesse de roue différent de l'une des roues et de l'autre roue dans l'appareil (4) de commande, la vanne (8a) de backup, montée dans la liaison (24) en moyenne pression de l'un des canaux (3a), est mise en position d'arrêt pour séparer la chambre (16a) de commande de la vanne (14a) relais de l'un des canaux (3a) de la chambre (16b) de commande de la vanne (14b) relais de l'autre canal (3b) et
b1) la pression de travail réelle est mesurée dans la chambre (34a) de travail, en liaison avec le capteur (38) de pression, de la vanne (14a) relais de l'un des canaux (3a) ou dans l'autre chambre (34b) de travail, en liaison avec le capteur (38) de pression, de la vanne (14b) relais de l'autre canal (3b) et un signal de pression de travail réelle pour l'un des canaux (3a) ou pour l'autre canal (3b) est envoyé à l'appareil (4) de commande pour, dans le cadre d'une régulation de la pression de l'un des canaux (3a) ou de l'autre canal (3b), produire une pression de travail pour l'un des actionneurs de frein ou pour l'autre actionneur de frein,
b2) au moyen du champ de caractéristiques, on détermine, en fonction de la valeur de la pression de travail de consigne et en fonction de la valeur de la pression de travail réelle régnant au cours d'un freinage ayant lieu encore en ayant le même comportement de vitesse des roues, la durée d'ouverture de la vanne (10b) d'entrée et/ou la durée d'ouverture de la vanne (12b) de sortie du groupe (6b) électropneumatique de vanne de l'autre canal (3b) ou la durée d'ouverture de la vanne (10a) d'entrée et/ou la durée d'ouverture de la vanne (12a) de sortie du groupe (6a) électropneumatique de vanne de l'un des canaux (3a) et on ouvre la vanne (10a, 10b) d'entrée ou la vanne (12a, 12b) de sortie pendant la durée d'ouverture déterminée, pour produire, dans la chambre (34b) de travail de la vanne (14b) relais de l'autre canal (3b) ou dans la chambre (34a) de travail de la vanne (14a) relais de l'un des canaux (3a), dans le cas d'une commande de pression de l'autre canal (3b) ou de l'un des canaux (3a), une pression de travail pour l'autre actionneur de frein ou pour l'un des actionneurs de frein.

7. Procédé pour faire fonctionner un module de régulation de la pression suivant la revendication 6, **caractérisé en ce que** l'on adapte le champ de caractéristiques dans le fonctionnement en freinage.

8. Procédé pour faire fonctionner un module de régulation de la pression suivant la revendication 6 ou 7, **caractérisé en ce que** l'on produit la valeur de la pression de travail de consigne par un système ABS, ESP, ASR ou ACC et/ou en fonction de ce que souhaite le conducteur.
